# EUROPEAN PATENT APPLICATION

(11) **EP 4 744 750 A1**
(43) Date of publication of application: **20.05.2026**
(21) Application number: 25216592.3
(22) Date of filing: 18.11.2025
(51) Int. Cl.: B01B 1/00, B01D 1/00, B01D 1/16, B01D 1/18, B01D 5/00, B01D 9/00, B01D 9/02, B01D 11/00, B01D 11/02, B01D 53/14, B01D 53/68, B01D 53/73, B01D 53/76, B01D 53/78, B01J 2/00, B01J 2/02, B01J 2/04

(54) **METHOD FOR PREPARING METALLIC MAGNESIUM AND INDUSTRIAL SILICON BY DECOMPOSING SERPENTINE WITH HYDROCHLORIC ACID**

(30) Priority: 19.11.2024 CN 202411652552
(71) Applicant: Toli County Zhongda Magnesium Industry Co., Ltd, Tacheng Prefecture Xinjiang 834599 (CN)
(72) Inventor: FENG, Fengqi, Tacheng Prefecture 834599 (CN); SUN, Muzhen, Tacheng Prefecture 834599 (CN); HUANG, Shaojun, Tacheng Prefecture 834599 (CN)
(74) Representative: Vitina, Maruta

(57) **Abstract**

A method for preparing metallic magnesium and industrial silicon by decomposing serpentine with hydrochloric acid is provided. Serpentine is used as a raw material, and is processed by a two-stage countercurrent leaching process in a hydrochloric acid system. A hydrometallurgical process is adopted, including beneficiation, wet grinding, slurry storage, filtration, two-stage atmospheric pressure hydrochloric acid leaching, washing and filtration of leached silica slag, iron removal and nickel precipitation from a leachate, separation, washing and filtration of a ferric hydroxide precipitate and a nickel hydroxide precipitate, crystallization and evaporation of a magnesium chloride solution, and hydrochloric acid preparation from a flue gas generated after thermal decomposition of magnesium chloride. The present disclosure develops a process of decomposing serpentine with hydrochloric acid and producing metallic magnesium by a drying-electrolysis method, and a process of producing industrial silicon by smelting silica slag in an electric furnace.

## Description

### TECHNICAL FIELD

This application relates to comprehensive utilization of serpentine, and more particularly to a method for preparing metallic magnesium and industrial silicon by decomposing serpentine with hydrochloric acid.

### BACKGROUND

With the rapid development of modern industry, traditional metal resources are on the verge of exhaustion. Therefore, it has become imperative to explore and develop new metal resources.

Magnesium is one of the most abundant elements on Earth. In addition to accounting for 2.3% of the metal ores in the Earth's crust, it also has considerable reserves in salt lakes and oceans. Accelerating the development of metallic magnesium materials is thus one of the key measures to achieve sustainable development. Owing to its excellent properties, the metallic magnesium experiences a continuous growth in its usage, and its application fields are continuously expanding. Magnesium has emerged as a "metal of the era" in the field of metallurgical materials, standing out among non-ferrous metals. Currently, magnesium has become the fifth most important non-ferrous metal, following copper, aluminum, lead, and zinc. Magnesium has seen rapid advancement due to its resource advantages. However, its market potential has not yet been fully tapped. Therefore, how to further accelerate the development of the magnesium industry and develop new smelting processes for metallic magnesium has become a research focus worldwide.

Traditional magnesium and magnesium-based materials are mainly derived from magnesite and other magnesium carbonate ores. These ores need to undergo a high-temperature calcination process to be converted into magnesium oxide. The specific production process includes the following steps.
1. Mining: The ores are extracted from magnesite or dolomite mines.
2. Crushing and grinding: The ores are crushed and grinded into a powdered form.
3. Pretreatment: The powder is pretreated to remove impurities and foreign substances.
4. Calcination: The pretreated powder is placed in a high-temperature furnace for calcination to be converted into magnesium oxide.
5. Purification: The magnesium oxide is purified to eliminate impurities and foreign substances.
6. Material preparation: The purified magnesium oxide serves as a key basic material for magnesium-based refractory materials, magnesium sulfate, and magnesium salts.
7. The traditional process for producing magnesium ingots is the Pidgeon process, which involves reducing and calcining ferrosilicon and dolomite at high temperatures, consuming large amounts of coal and emitting significant quantities of carbon dioxide.

In accordance with current environmental protection requirements, this traditional production process has serious deficiencies and problems. Firstly, it consumes substantial energy and generates large volumes of carbon dioxide during the calcination stage, thereby placing significant pressure on the supply of metallic magnesium and magnesium-based materials.

Therefore, the research and development of new chemical processes and process routes are crucial for the industrial development of magnesium and magnesium-based materials. Using serpentine instead of traditional magnesium carbonate ores can open up new sources for magnesium and magnesium-based materials.

China is rich in serpentinite mineral resources, mostly in the form of ultrabasic rock-type serpentinite deposits. These deposits are characterized by a large number of occurrences, large scales, wide distribution, and favorable quality conditions. Serpentine belongs to the 1:1 layered silicate category, which is composed of silicate tetrahedral sheets and magnesium-oxygen octahedral sheets. It mainly includes chrysotile, lizardite, and antigorite. The main mineral components of serpentinite, serpentine tailings, and asbestos tailings are serpentine, along with small amounts of magnetite, talc, brucite, dolomite, calcite, etc. Their main chemical components are SiO₂ and MgO, with small amounts of Fe₂O₃, Al₂O₃, NiO, Cr₂O₃, etc, where magnesium oxide is the dominant metal oxide.

Currently, the common method for the resource utilization of serpentine involves directly leaching serpentine raw materials with organic and inorganic acids to produce magnesium-containing compounds. The residue left after extracting magnesium oxide from serpentine is directly reacted with sodium hydroxide to produce chemical products such as sodium metasilicate or silica fume.

So far, there have been no public reports on technologies such as the hydrochloric acid method for decomposing serpentine, the high-temperature drying-electrolysis process for producing metallic magnesium, or the electric furnace smelting of silica slag to produce industrial silicon. These technologies are characterized by low environmental pollution, low energy consumption, and low costs.

### SUMMARY

An object of the disclosure is to provide a method for preparing metallic magnesium and industrial silicon by decomposing serpentine with hydrochloric acid.

In order to achieve the above object, the following technical solutions are adopted.

This application provides a method for preparing metallic magnesium and industrial silicon by decomposing serpentine with hydrochloric acid, comprising:
(1) selecting the serpentine as a raw material, subjecting the serpentine to beneficiation and wet grinding to obtain a serpentine slurry, and concentrating the serpentine slurry followed by filtration to obtain a raw material slurry;
(2) subjecting the raw material slurry to two-stage atmospheric-pressure hydrochloric acid leaching to obtain a crude silica slag and a leachate;
(3) subjecting the crude silica slag to continuous countercurrent decantation (CCD), filtration and drying to obtain a silicon slag; and subjecting the silicon slag to reduction smelting, refining for impurity removal and crushing to obtain the industrial silicon;
(4) subjecting the leachate to iron removal and nickel precipitation to obtain a first magnesium chloride solution, an iron hydroxide precipitate and a nickel hydroxide precipitate; subjecting the first magnesium chloride solution to separation with the iron hydroxide precipitate and the nickel hydroxide precipitate followed by washing and filtration to collect the first magnesium chloride solution;
(5) after secondary impurity removal and purification in step (4), subjecting the first magnesium chloride solution to concentration by evaporation to obtain a second magnesium chloride solution with a concentration of 45 wt.%-55 wt.%;
(6) drying the second magnesium chloride solution to obtain a solid magnesium chloride;
(7) electrolyzing the solid magnesium chloride into the metallic magnesium and chlorine gas; and
(8) refining the metallic magnesium.

In some embodiments, in step (1), the serpentine slurry has a concentration of 8 wt.%-15 wt.%, and is obtained by slurrying a serpentine ore fine powder with a hydrochloric acid solution.

In some embodiments, in step (2), the two-stage atmospheric-pressure hydrochloric acid leaching adopts a two-stage countercurrent leaching process in a hydrochloric acid system, and comprises:
(a) subjecting the raw material slurry to first-stage leaching for 2-3 h to obtain a first leached slurry, wherein a slurry temperature of the first-stage leaching is controlled at 80°C-85°C;
(b) thickening the first leached slurry to obtain a first overflow and an underflow, subjecting the first overflow to neutralization for iron removal, wherein a leached residual acid has a concentration of 5-15 g/L; and

subjecting the underflow to second-stage leaching; and
(c) performing the second-stage leaching for 2-3 h to obtain a second leached slurry, wherein a slurry temperature of the second-stage leaching is controlled at 95°C-100°C;
subjecting the second leached slurry to separation to obtain the crude silica slag and a second overflow; and
returning the second overflow to the first-stage leaching.

In some embodiments, in step (3), the crude silica slag is slurried before CCD; and the CCD is performed in a thickener, and adopts a 5-stage countercurrent washing process with a weight ratio of washing water to a solid entering the thickener controlled at 2:1.

In some embodiments, in step (3), the reduction smelting uses the silicon slag as a main raw material and an upgraded coke powder and a wood block as reducing agents, and is performed in a semi-closed submerged arc furnace.

In some embodiments, in step (3), the refining for impurity removal adopts a bottom-blowing method using oxygen and a compressed air, and is performed through a step of:
sequentially blowing the compressed air and oxygen to a bottom of a silicon ladle to perform oxidative refining on a molten silicon.
In some embodiments, in step (4), the iron removal adopts a two-stage process, the two-stage process comprises a first-stage iron removal and a second-stage iron removal;
the first-stage iron removal comprises:
   neutralizing a residual acid using a magnesium hydroxide slurry as a neutralizing agent, such that an endpoint pH value of the first-stage iron removal is controlled at 3.0-3.5 to allow hydrolytic precipitation of ferric iron and aluminum, and silica is simultaneously co-precipitated for removal, so as to obtain a first-stage slurry; and subjecting the first-stage slurry to thickening separation;
   the second-stage iron removal comprises:
      controlling an endpoint pH value of the second-stage iron removal at 4.0-4.5, blowing compressed air to oxidize ferrous iron to ferric iron, enabling further hydrolysis of iron and aluminum in the first-stage slurry; subjecting an overflow of the second-stage iron removal to nickel precipitation; and slurrying an underflow of the second-stage iron removal with a CCD overflow liquid followed by returning to the first-stage iron removal for valuable metal recovery from a residue.

In some embodiments, in step (6), the drying adopts a process involving cooling granulation, one-stage air fluidization dehydration and one-stage molten salt dehydration to obtain anhydrous magnesium chloride.

In some embodiments, the one-stage molten salt dehydration adopts a hydrogen chloride drying system to gradually remove water molecules from the second magnesium chloride solution to obtain a molten magnesium chloride and a water-containing hydrogen chloride gas; and the water-containing hydrogen chloride gas is recovered for hydrochloric acid production.

In some embodiments, the method adopts a comprehensive serpentine ore utilization system;
the comprehensive serpentine ore utilization system comprises a two-stage countercurrent leaching reaction device; a leachate outlet of the two-stage countercurrent leaching reaction device is connected to a solid-liquid separation and washing device; an overflow outlet of the solid-liquid separation and washing device is connected to a metallic magnesium production line; and a silicon slag outlet of the solid-liquid separation and washing device is connected to an industrial silicon production line;
the metallic magnesium production line comprises an iron removal device, a nickel precipitation device, an evaporation concentration device, a magnesium chloride drying device and a magnesium chloride electrolysis device connected in sequence; and
the industrial silicon production line comprises a silicon slag drying device, a reduction smelting device and a refining and impurity removal device connected in sequence.

Compared to the prior art, the present disclosure has the following beneficial effects.

The present disclosure develops a process for decomposing serpentine with hydrochloric acid and producing metallic magnesium through a drying-electrolysis method, as well as a process for producing industrial silicon by smelting silica slag in an electric furnace. The resulted metallic magnesium product meets the requirements for chemical composition specified in the national standards, and the quality of the industrial silicon product complies with the standards for silicon for chemical use. The present disclosure leads to short process flow, low environmental pollution, low energy consumption and relatively low cost, which opens up a new development approach for the comprehensive utilization of serpentine resources.

### BRIEF DESCRIPTION OF THE DRAWINGS

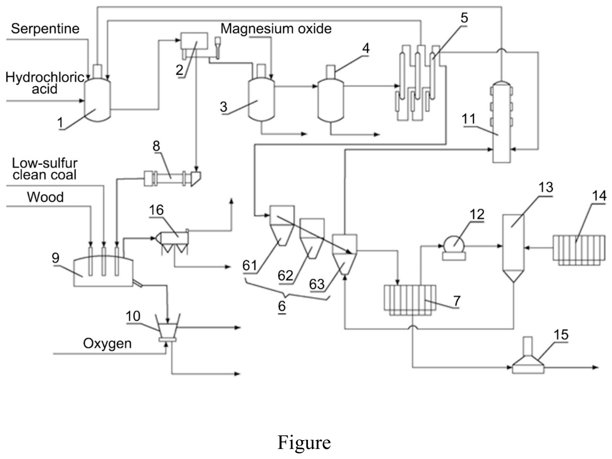

The figure is a structural diagram of a system in accordance with an embodiment of the present disclosure.

In the drawings: 1. two-stage countercurrent leaching reaction device; 2. solid-liquid separation and washing device; 3. iron removal device; 4. nickel precipitation device; 5. evaporation concentration device; 6. magnesium chloride drying device; 61. granulation centrifuge; 62. air fluidized bed dryer; 63. HCl gas drying mechanism; 7. magnesium chloride electrolysis device; 8. silicon slag drying device; 9. reduction smelting device; 10. refining and impurity removal device; 11. hydrochloric acid absorption tower; 12. chlorine compressor; 13. hydrochloric acid synthesis device; 14. water electrolysis device; 15. metallic magnesium refining and casting device; and 16. dust removal device.

### DETAILED DESCRIPTION OF EMBODIMENTS

This application will be clearly and completely described below with reference to the accompanying drawings in the embodiments of the disclosure. Conditions not specifically noted in the examples should be performed in accordance with conventional conditions or conditions recommended by the manufacturer. The instruments used without indicating the manufacturer are conventional products that can be purchased commercially.

The process provided by this application employs a system that comprehensively utilizes serpentine. As shown in the figure, the system includes a two-stage countercurrent leaching reaction device 1. A leaching outlet of the two-stage countercurrent leaching reaction device 1 is connected to a solid-liquid separation and washing device 2. An overflow port of the solid-liquid separation and washing device 2 is connected to a metallic magnesium production line. A silicon slag outlet of the solid-liquid separation and washing device 2 is connected to an industrial silicon production line. The metallic magnesium production line includes an iron removal device 3, a nickel precipitation device 4, an evaporation concentration device 5, a magnesium chloride drying device 6 and a magnesium chloride electrolysis device 7 in sequence. The industrial silicon production line includes a silicon slag drying device 8, a reduction smelting device 9 and a refining and impurity removal device 10 in sequence.

In an embodiment, the solid-liquid separation and washing device 2 is a continuous countercurrent decantation (CCD) thickener.

In an embodiment, a gas outlet of the magnesium chloride drying device 6 is connected to a hydrochloric acid absorption tower 11. A hydrochloric acid outlet of the hydrochloric acid absorption tower 11 is connected to a hydrochloric acid recovery inlet of the two-stage countercurrent leaching reaction device 1.

In an embodiment, the magnesium chloride drying device 6 includes a granulation centrifuge 61, an air fluidized bed dryer 62 and an HCl gas drying mechanism 63. The granulation centrifuge 61 is connected to the air fluidized bed dryer 62 via a particle conveying mechanism. An outlet of the air fluidized bed dryer 62 is connected to an inlet of the HCl gas drying mechanism 63.

Specifically, the air fluidized bed dryer 62 includes a discharge hopper, a conveyor, a vibrating screen, a wet material silo and a feed pipe (conventional, not shown) arranged along a particle transport route.

In an embodiment, a gas outlet of the magnesium chloride electrolysis unit 7 is connected to a chlorine inlet of a hydrochloric acid synthesis device 13 via a chlorine compressor 12. A hydrogen inlet of the hydrochloric acid synthesis device 13 is connected to a water electrolysis unit 14.

In an embodiment, the magnesium chloride electrolysis device 7 is further connected to a metallic magnesium refining and casting device 15.

In an embodiment, a flue gas outlet of the reduction smelting device 9 is connected to a dust removal device 16 via a waste heat boiler.

The preparation method provided in this application includes the following steps.

### Step (1) Slurry storage and filtration

Serpentine ore is transported to a smelting yard, subjected to coarse and fine crushing to obtain crushed serpentine ore with a particle size of approximately 10 mm. The crushed serpentine ore is stored in a coarse powder silo of a grinding system and then enters the grinding system to obtain a coarse powder. The coarse powder enters a quantitative feeder, a belt conveyor and a bucket elevator to be fed into the vertical mill to obtain a fine powder. The fine powder is collected by a bag filter, then enters a pneumatic chute and a bucket elevator and is lifted to the fine powder silo for temporary storage. A particle size of the fine powder is controlled to be above 0.074 mm for 85 wt.% or more. The fine powder is slurried in the slurry conditioning tank on the top of the silo and sent to the leaching process.

The step (1) mainly involves treating the slurry with a concentration of approximately 10 wt.% transported from the raw material pretreatment area to meet the feed requirements of the subsequent leaching process. The slurry storage and filtration include steps such as slurry concentration, storage, filtration and pulping. Hydrochloric acid is used as a pulping liquid for filter cake pulping. During pulping, small amounts of oxides in serpentine, such as MgO, FeO(OH) and NiO, react with the hydrochloric acid. A small amount of HCl overflows during pulping, which is collected, washed, and recovered.

### Step (2) Hydrochloric acid leaching

Regarding the composition of serpentine ore, metallic elements mainly exist in the form of metal oxides, such as MgO, FeO(OH), NiO, CoO, CaO, FeO, MnO and ZnO. Under normal pressure (temperature not exceed 95°C), most oxides of metal Me (including Mg, Ni, Co, Mn, Ca and Al) react with hydrochloric acid to form soluble chloride salts (MeClₙ) that dissolve into the solution, which is expressed as the following reaction formula:

Me₂Oₙ(s) + 2nH⁺ → 2Meⁿ⁺ + nH₂O

In the above reaction formula, Me refers to Ni, Co, Mn, etc., and n represents valence of the metal ion. Magnesium mainly exists in the silicate mineral lizardite. Therefore, the dissolution of lizardite allows most magnesium to enter the leachate expressed as follows:

Mg₃Si₂O₅(OH)₄(s)+6H⁺→3Mg²⁺+2SiO₂(s)+5H₂O

Based on the serpentine leaching test results, this application adopts a two-stage countercurrent atmospheric-pressure hydrochloric acid leaching process.

The pretreated raw material slurry is first subjected to first-stage leaching. A temperature of the slurry in the first-stage leaching is controlled at approximately 80°C-85°C, and the leaching time is 2-3 h, during which most metal oxides are leached. After thickening a first-stage leachate, the overflow is subjected to neutralization for iron removal, with a concentration of a residual acid between 5-15 g/L. The underflow from the first-stage leaching is subjected to second-stage leaching. A temperature of the slurry in the second-stage leaching is controlled at approximately 95°C-100°C, and the leaching time is 2-3 h. The crude silica slag obtained after separation in the second-stage leaching is subjected to CCD. The overflow from the second-stage leaching is returned to the first-stage leaching process.

### Step (3) CCD and silica slag filtration

The crude silica slag obtained from the leaching workshop is slurried and then subjected to countercurrent washing in a thickener. The washing water comes from product washing water and tail gas scrubbing effluent. In order to improve CCD efficiency, the washing system adopts a 5-stage countercurrent washing method, with a washing ratio controlled at 2:1 (a weight ratio of washing water to solids entering the thickener). The overflow liquid from CCD1 is sent to the iron removal and nickel slurry workshop to slurry iron slag from the second-stage iron removal, and then sent to the first-stage leaching. The underflow from CCD5 is filtered, and the filtered crude silica containing water is conveyed to the pyrometallurgical workshop by belt for further production of silicon products.

### Step (3.1) Metallic magnesium production process

### Step (3.1.1) Iron removal and nickel precipitation

The iron removal and nickel precipitation process mainly utilizes magnesium oxide slurry to neutralize residual acid in the overflow from the first-stage leaching, and then pH value adjustment is performed to remove impurity elements such as iron, aluminum and silicon, thereby recovering valuable metals through nickel precipitation.

Iron removal adopts a two-stage process, using magnesium hydroxide slurry as a neutralizing agent. After neutralizing the residual acid, an endpoint pH value of the first-stage iron removal is controlled at 3.0-3.5 to hydrolyze and precipitate ferric iron and aluminum, while simultaneously removing co-precipitated silica. After iron removal, the slurry is subjected to thickening separation. In order to facilitate sedimentation of precipitate particles, a portion of the thickening underflow is used as seed crystals during the iron removal process. The underflow of the first-stage iron removal is then sent to the product filtration and separation process for treatment.

An endpoint pH value of the second-stage iron removal is 4.0-4.5. Compressed air is blown in to oxidize ferrous iron to ferric iron, enabling further hydrolysis of iron and aluminum in the slurry from the first-stage iron removal. The overflow from the second-stage iron removal is sent to nickel precipitation. A portion of the underflow from the second-stage iron removal is returned as seed crystals, while the rest is slurried with the overflow from CCD6 and returned to the first-stage iron removal to recover valuable metals such as nickel from the slag.

Magnesium oxide slurry is also used as the precipitant for nickel precipitation. An endpoint pH value of nickel precipitation is controlled at 8.0-8.5, causing nickel in the solution to form hydroxide precipitates, with a small amount of manganese also precipitated. After precipitation, the slurry is sent to a thickener for liquid-solid separation.

### Step (3.1.2) Product separation and filtration

Product separation includes thickening separation of the first-stage iron removal product, thickening separation of the nickel precipitation product, filtration separation of the thickened underflow and product packaging.

For the thickening separation of the first-stage iron removal product, the overflow from the thickener is sent to the second-stage iron removal in the iron removal and nickel precipitation workshop. A portion of the underflow from the thickener is returned as seed crystals, while the rest is subjected to product filtration and washing. After two-stage washing and two-stage pressure filtration, a wet iron concentrate is produced and sent to an iron concentrate drying workshop for drying. Magnesium chloride secondary steam condensate is used for washing.

For the thickening separation of the nickel precipitation product, part of the overflow from the thickener is sent to the magnesium chloride evaporation workshop after precision filtration, with a portion used as a precipitant and a flocculant preparation solution. Part of the underflow from the thickener is returned as seed crystals, while the rest is subjected to product filtration and washing. After two-stage washing and two-stage pressure filtration, the nickel product is produced and automatically packaged. Magnesium chloride secondary steam condensate is used for washing. The packaged nickel product can be stored in a nickel product warehouse.

Flocculant preparation primarily provides usable flocculant solution for raw material thickening, CCD and product thickening separation, which is then pumped to various flocculant application points.

### Step (3.1.3) Magnesium chloride concentration by evaporation

The magnesium chloride solution, after storage and preheating, enters an evaporation concentration system. This system adopts four-effect evaporation to obtain a magnesium chloride solution with a concentration of 48 wt.%-51 wt.%. The magnesium chloride solution is then cooled and granulated in a granulation tower to obtain magnesium chloride 4.8-hydrate (MgCl₂·4.8H₂O), which is conveyed to a magnesium chloride drying device by a conveyor for drying. The secondary steam condensate after evaporation is returned to the system as slag washing water. A discharged mother liquor is returned to the iron removal and nickel precipitation workshop.

### Step (3.1.4) Metallic magnesium smelting process

The magnesium smelting process involves magnesium chloride and auxiliary materials.

### (1) Magnesium chloride solution

A forced circulation evaporator is used to evaporate and concentrate magnesium chloride to obtain a magnesium chloride solution with a magnesium chloride content of 48 wt.%-51 wt.%, which is used as a raw material for magnesium chloride drying.

Specifically, the magnesium chloride solution after hydrometallurgical purification contains approximately 25.44 wt.% MgCl₂, which is concentrated by means of multi-effect forced evaporation to obtain a magnesium chloride solution with a concentration of approximately 51 wt.%.

### (2) Concentrated sulfuric acid used as auxiliary material

A water- containing chlorine gas generated by magnesium chloride electrolysis needs to be adsorbed and compressed. 98 wt.% concentrated sulfuric acid is purchased commercially, and 93 wt.% concentrated sulfuric acid is produced for sale.

The magnesium smelting process involves the following systems.

### (1) Magnesium chloride drying system

Since the MgCl₂ solution produced by hydrometallurgical evaporation and concentration has a concentration of approximately 51 wt.%, the present disclosure adopts a process of cooling granulation + one-stage air fluidization dehydration + one-stage molten salt dehydration to obtain anhydrous magnesium chloride.

The purpose of granulation is to convert the concentrated liquid brine into solid particles. Magnesium chloride brine is fed into a granulation centrifuge, and is sprayed into the granulation tower in the form of droplets. The droplets of magnesium chloride brine fall in the granulation tower, coming into counter-current contact with an ambient air-cooling airflow introduced through a louver system and co-current contact with an airflow at a top of the tower, thereby controlling the particles to fall in an umbrella-shaped trajectory and the temperature of the air discharged from the top of the tower. As the droplets cool and crystallize, solid particles are formed. A discharge hopper is arranged at a bottom of the granulation tower to receive the granulated wet particles. After exiting the bottom of the granulation tower, the particles are transported to a set of vibrating screens through a belt or bucket conveyor system to screen out relatively large particles. The relatively large particles are re-dissolved and re-granulated. The remaining particles are sent to a wet material silo and then to an air fluidized bed dryer.

The main purpose of the air fluidized bed dryer is to partially dry the MgCl₂ particles, reducing the concentration from approximately 4.8 mol H₂O/mol MgCl₂ to approximately 1.8 mol H₂O/mol MgCl₂. Water-containing magnesium chloride particles in the wet material silo are fed into the air dryer through a feed pipe. The particles are then added to a top tray of a two-stage vertical fluidized bed using hot air. The hot air is introduced from a bottom of each stage as a heating/drying medium. The compressed air is heated by an electric heater of the air dryer, and is supplied to a gill-shaped feeder in the top tray, so that the wet particles are evenly distributed on the surface of the fluidized bed.

The produced MgCl₂ enters a hydrogen chloride drying tower, so that water molecules are gradually removed to obtain a magnesium chloride molten salt, which meets the requirements of the electrolytic cell and extends service life of the electrolytic cell.

The HCl gas used for drying is produced by high-temperature chemical synthesis of hydrogen from water electrolysis and Cl₂ produced by the magnesium electrolysis cell. After drying, the water-containing HCl gas is subjected to multi-stage washing and concentration to obtain a 36 wt.% hydrochloric acid solution, which is then returned to the leaching process.

### (2) Metallic magnesium smelting system

Magnesium electrolysis primarily electrolyzes MgCl₂ sent from the drying system into metallic magnesium and chlorine. The magnesium is refined and cast into ingots for sale. The chlorine gas reacts with hydrogen through combustion through the synthesis process to produce HCl.

MgCl₂ is electrolyzed into Mg and Cl₂ in the electrolytic cell. The chlorine gas is discharged through a chlorine pipe and sent to a chlorination section via a chlorine compressor chamber. Molten magnesium is periodically extracted by using a vacuum magnesium extraction ladle.

The magnesium electrolysis adopts a multi-polar cell magnesium production process. During production, argon gas is introduced into the furnace to a slightly positive pressure to protect the molten magnesium from oxidation. A purification tower is used to purify residual chlorine gas discharged during equipment maintenance, chlorine gas generated during start-up and emergency chlorine gas.

The chlorine compressor is used to transport the electrolytic chlorine gas. A medium of the chlorine compressor is concentrated sulfuric acid. The chlorine gas from the electrolytic cell contains electrolyte sublimates. Chlorine gas from the electrolytic cell flows through chlorine gas branch pipes to a main chlorine delivery pipe, and then enters a bag filter to remove sublimates. After sublimate removal sublimation, the chlorine gas is sent to a turbine chamber by the chlorine compressor for pressurization before being sent to the synthesis process. The bag filter is subjected to ash cleaning by means of compressed air pulse backblowing. The main chlorine gas delivery pipe and the bag filter are cleaned every few days. The removed sublimates are processed together with the waste salt discharged from the chlorination furnace into metallurgical auxiliary materials for recycling.

### (3) Metallic magnesium refining system

Molten magnesium is pumped to a refining furnace. A refining flux is added according to a preset ratio, with a flux amount of 20 kg per ton of magnesium. The mixture is thoroughly stirred to achieve purification. The refining is performed at 1013-1023 K for about 10-20 min. Then, the mixture is allowed to stand for 15-20 min to separate impurities from magnesium. During the refining process, magnesium in the refining furnace may burn, and gas protection can be used to prevent magnesium oxidation.

After refining, the molten magnesium is fed into a continuous casting machine for pouring. The continuous casting machine rotates slowly and continuously. The cast metallic magnesium is cooled rapidly. Sulfur powder is sprayed onto the surface of the magnesium ingot to prevent magnesium oxidation, ultimately forming the magnesium ingot.

The magnesium ingot is subjected to surface treatment to make it smooth, and is finally packaged and stored.

### Step (3.2) Industrial silicon smelting process

The industrial silicon smelting process involves silica slag and auxiliary materials.

The raw materials for industrial silicon production include silica, a carbonaceous reducing agent and electrodes. Since impurities in the raw materials will eventually be brought into the product, the content of impurities such as iron, aluminum, and calcium is strictly limited during raw material selection. Because there is no impurity removal during the smelting process, all impurities in the raw materials will remain in the industrial silicon product and slag. In order to ensure the quality of the industrial silicon product, raw materials with high purity and low content of harmful impurities must be used.

In order to ensure the maximum conversion of silica to silicon, the selected carbonaceous reducing agent (low-sulfur and low-ash coal, wood block, etc.) must have excellent reactivity.

The silica and carbon reaction bed in the electric furnace must maintain high permeability to facilitate the most sufficient reaction between silica and carbon. The carbonaceous reducing agent must have sufficient strength to avoid being crushed into fine particles or powder during feeding. Meanwhile, the carbon must maintain its strength when the temperature in the electric furnace is very high. The electrical energy required for the reaction process is provided by carbonaceous electrodes. The electrodes are inserted deep into the furnace charge. Electrical energy is released from ends of the carbonaceous electrodes in the electric furnace. A high-heat area of the electric arc is close to a bottom of the electric furnace to form a reaction zone. The molten silicon generated by the reaction forms a molten pool at the bottom of the furnace. The electrodes must penetrate deep into the furnace charge to expand the reaction zone and ensure the molten pool at the bottom of the furnace is continuous.

If the carbonaceous reducing agent in the furnace charge has high electrical conductivity, the furnace charge has low specific resistance, resulting in excessive electrode current, and the electrodes cannot penetrate deeply, the high-heat area will shift upwards, and the reaction zone will shift upwards accordingly. This leads to the rise of the furnace bottom and an increase in branch current, affecting the smooth operation of the furnace condition. Therefore, it is necessary to select a carbonaceous reducing agent with low electrical conductivity or achieve appropriate electrical conductivity by adjusting the proportion and particle size of low-sulfur and low-ash coal and wood blocks.

### (1) Source and composition of silicon slag

Silicon slag is obtained after pressure filtration and washing by hydrometallurgical hydrochloric acid leaching, with a moisture content of 25 wt.%.

### (2) Carbonaceous reducing agent:

Carbonaceous reducing agents used in industrial silicon production includes low-ash bituminous coal, petroleum coke, semi-coke, and wood blocks. The physicochemical properties of carbonaceous reducing agents have a significant impact on the smelting indicators and quality of industrial silicon.

In the present disclosure, upgraded coke powder is selected as the carbonaceous reducing agent, which is mixed with silicon slag, pressed into blocks, and fed into the electric furnace.

### (3) Wood block

The wood blocks are purchased commercially. A particle size of the incoming material meets the furnace feeding requirements, approximately 20×20×50 mm, and no further crushing or screening processing is performed in the factory area. The wood blocks are transported to the auxiliary material shed in the factory area by a truck for storage. Wood blocks are an excellent reducing agent. Mechanically processed wood blocks have very low ash content (usually less than 3 wt.%), high reactivity and extremely specific resistance. The presence of wood blocks in the furnace charge reduces sintering of the furnace charge.

The wood blocks require a fixed carbon content of 30 wt.%-65 wt.%, an ash content less than 3 wt.% and a volatile matter content controlled at 26 wt.%-45 wt.%.

### (4) Electrode

Graphite is purchased commercially and transported by truck to the factory warehouse for storage. Graphite electrodes are manufactured using petroleum coke and asphalt tar as raw materials to produce carbon electrodes, which are then graphitized in a graphitization resistance furnace at 2273-2773 K for graphitization. The graphite electrodes are used to transmit electrical energy into the electric furnace, and are a major component of electric furnace design. The physical and chemical properties of the electrodes substantially affect the quality of smelted products and the technical and economic indicators of production. Electrodes should have high electrical conductivity, sufficient mechanical strength, high oxidation resistance temperature, and low consumption. Cylindrical electrodes are typically used. The shape of the electrode should be geometrically designed to ensure complete contact between the electrode and the copper tile to facilitate power supply and prevent arcing.

### Step (3.2.2) Industrial silicon smelting process

The present disclosure uses silicon slag as the main raw material, upgraded coke powder and wood blocks as reducing agents, and adopts a semi-closed submerged arc furnace for smelting. The process can be divided into five stages, including silicon slag drying, material preparation, smelting, refining, and finished product processing.

### (1) Silicon slag drying

The silicon slag produced by the hydrometallurgical leaching process has a high moisture content and cannot be directly used for electric furnace smelting. The present disclosure uses a rotary kiln to dry the silicon slag with natural gas as fuel. After drying, the moisture content of the silicon slag is less than 1 wt.%.

### (2) Material preparation

Commercially purchased upgraded coke powder is unloaded into a silo by a dump truck. In order to improve production efficiency and reduce energy consumption, the batching of a 8×33MVA industrial silicon electric furnace is designed to be entirely automated. The silicon slag and upgraded coke powder are dried, metered by a quantitative feeder and mixed in proportion, with a metering accuracy controlled at 0.5%. Then, the mixture is pressed by a double-roll press to obtain a high-strength block material. A distributed control system (DCS) is adopted for automatically controlling feeding, weighing and batching. The mixed material after batching is conveyed to a high-span platform of the electric furnace by a high-angle feeding belt conveyor, then unloaded into a furnace top silo by a distributing belt. The furnace charge is intermittently added into the furnace via charging pipes for continuous smelting and regular tapping. Each electric furnace is provided with 12 high-level silos and 12 charging pipes below, including one central charging pipe and three external charging pipes. In order to prevent eddy currents, the charging pipes and the portion below the busbar of the electrode holder are mostly made of non-magnetic stainless steel, and the lower part of the charging pipes is cooled with water.

### (3) Smelting

The mixed material is conveyed into the electric furnace via the top silo and charging pipes for smelting. Smelting is a continuous process, with batch feeding and intermittent silicon tapping. According to the smelting conditions of the electric furnace, the furnace charge is added in batches. Current is passed through the electrodes to generate a high-temperature electric arc between the electrodes and the furnace charge, so that the furnace charge is heated, melted, and undergoes a reduction reaction. During the smelting process, in order to increase the resistance of the furnace charge, improve air permeability of the furnace charge and accelerate the melting speed, a furnace tamping operation is required based on the surface adhesion of the charge. To reduce labor intensity, a furnace tamping machine is used to tamp the charge on three large operating surfaces. During smelting, the electrodes are continuously consumed and need to be extended regularly to replenish the consumed graphite electrodes. The graphite electrodes are lifted from ±0.00 m to the electrode receiving platform by a 10 t overhead crane for extension. The electric furnace has five silicon outlets for alternate use. The furnace discharges molten silicon every 2-3 h. When a certain amount of liquid Si accumulates at the bottom of the furnace, the silicon outlets are opened using a taphole opener or burner, allowing the molten silicon to flow directly into a silicon ladle on a ladle car. External-furnace synthetic slag oxygen-enriched bottom blowing refining is adopted in the silicon ladle.

A flue gas from the electric furnace is first subjected to waste heat recovering in a waste heat boiler, and then is discharged and subjected to dust removal by a dust removal system. The flue gas contains a large amount of highly volatile SiO₂ gas (with a boiling point below 1880°C), which condenses rapidly when cooled and undergoes a disproportionation reaction to form Si and SiO₂ powder, i.e., microsilica powder. After being recovered by the dust removal system, the microsilica powder is densified and packaged using a densification device and stored in a microsilica powder warehouse, which can be sold as a by-product or returned to the batching system.

Each workshop is provided with one set of microsilica powder densification system, consisting of three densification silos each with a volume of 175 m³ and a densification device. Undensified dust is fed into a densification ash storage tank, and fluidized by gas through the densification device, so that the density of the microsilica powder is increased from 0.2 t/m³ to 0.6 t/m³ without altering its physical and chemical properties.

### (4) Refining

The refining process of the present disclosure adopts bottom blowing of oxygen and compressed air. Permeable bricks for bottom blowing are installed at the bottom of the ladle, and numerous fine copper tubes are provided within the permeable bricks. Oxygen and air are blown from these fine copper tubes into the silicon solution for refining. The refining process requires no stirring. Oxygen is blown from the bottom of the silicon ladle to improve the kinetic conditions of the slag-metal element phase reaction, accelerate the reaction to remove impurities as quickly as possible, and reduce heat loss and silicon liquid adhesion to the ladle.

Oxygen and compressed air transported from the oxygen station and air compressor station are introduced into the bottom of the silicon ladle and the permeable bricks through heat-resistant rubber tubes to react with the freshly discharged silicon liquid, so as to remove impurities Ca and Al. 2-3 minutes before discharge, compressed air is first introduced into the bottom of the ladle to prevent silicon liquid from pouring into the permeable holes. When the silicon liquid reaches 1/3 of the depth of the ladle bottom depth, oxygen can be turned on for oxidative refining. After the furnace is plugged and the refining is completed (contents of Al, Ca, and other impurity below required values), the oxygen is turned off. The silicon ladle is pulled to a casting bay by a furnace trolley for secondary refining. After pouring out the silicon liquid, compressed air is continuously introduced for 3-5 min to prevent clogging of the permeable holes. Shortly after, the heat-resistant rubber tube is removed, and the silicon slag is removed, waiting for the next tapping. The oxidative refining process can effectively remove main impurities, i.e., Al and Ca, from industrial silicon, with a simple process and low silicon burn-off rate. Therefore, external-furnace silicon ladle oxidative bottom-blowing refining is generally adopted.

### (5) Finished product processing

After blowing, the silicon liquid is transported to a casting room for standing to settle slag, sampled for testing, and then cast by a crane. The cast block-shaped industrial silicon products are stored in a semi-finished product area according to grade. The semi-finished products are manually or mechanically fed into a jaw crusher via a belt conveyor for crushing, and then conveyed to a high-efficiency vibrating screen. Industrial silicon with a particle size larger than 50 mm is bagged through an electro-hydraulic sector gate and transported to a product warehouse by a forklift. Industrial silicon with a particle size smaller than 50 mm is conveyed through a conveyor belt and subjected to secondary screening. Industrial silicon with a particle size larger than 10 mm enters the hopper, and is then bagged through an electro-hydraulic sector gate and transported to a finished product warehouse by a forklift. The cast silicon ladle is cleaned and repaired for reuse in the next tapping.

The product includes the main product, i.e., metallic magnesium, and the by-product, i.e., industrial silicon.

### (1) Main product: metallic magnesium

The metallic magnesium product produced by the present disclosure meets relevant chemical composition requirements of the national standard GB/T 3499-2023 "Magnesium ingots". The surface of crude magnesium ingots should be flat and clean, free from residual flux, inclusions, cold shuts, flash, shrinkage cracks, oxidative combustion products, and other usage defects. No residual acid is allowed, and no moisture is permitted in shrinkage holes.

### (2) By-product: industrial silicon

The industrial silicon product generally has a particle size of 5-120 mm and is stored in a warehouse of bagged finished products. The product quality complies with the chemical silicon standard specified in the national standard GB/T 2881-2014 "Silicon metal".

The embodiments of the present disclosure are disclosed above. Those skilled in the art should understand that the specific embodiments described above are merely illustrative of the disclosure, and are not intended to limit the present disclosure. Equivalent modifications and variations made by those skilled in the art without departing from the spirit of the disclosure shall fall within the scope of the disclosure defined by the appended claims.

## Claims

1. A method for preparing metallic magnesium and industrial silicon by decomposing serpentine with hydrochloric acid, comprising:
(1) selecting the serpentine as a raw material, subjecting the serpentine to beneficiation and wet grinding to obtain a serpentine slurry, and concentrating the serpentine slurry followed by filtration to obtain a raw material slurry;
(2) subjecting the raw material slurry to two-stage atmospheric-pressure hydrochloric acid leaching to obtain a crude silica slag and a leachate;
(3) subjecting the crude silica slag to continuous countercurrent decantation (CCD), filtration and drying to obtain a silicon slag; and subjecting the silicon slag to reduction smelting, refining for impurity removal and crushing to obtain the industrial silicon;
(4) subjecting the leachate to iron removal and nickel precipitation to obtain a first magnesium chloride solution, an iron hydroxide precipitate and a nickel hydroxide precipitate; subjecting the first magnesium chloride solution to separation with the iron hydroxide precipitate and the nickel hydroxide precipitate followed by washing and filtration to collect the first magnesium chloride solution;
(5) after step (4), subjecting the first magnesium chloride solution to concentration by evaporation to obtain a second magnesium chloride solution with a concentration of 45 wt.%-55 wt.%;
(6) drying the second magnesium chloride solution to obtain a solid magnesium chloride;
(7) electrolyzing the solid magnesium chloride into the metallic magnesium and chlorine gas; and
(8) refining the metallic magnesium.

2. The method of claim 1, **characterized in that** in step (1), the serpentine slurry has a concentration of 8 wt.%-15 wt.%, and is obtained by slurrying a serpentine ore fine powder with a hydrochloric acid solution.

3. The method of claim 1, **characterized in that** in step (2), the two-stage atmospheric-pressure hydrochloric acid leaching adopts a two-stage countercurrent leaching process in a hydrochloric acid system, and comprises:
(a) subjecting the raw material slurry to first-stage leaching for 2-3 h to obtain a first leached slurry, wherein a slurry temperature of the first-stage leaching is controlled at 80°C-85°C;
(b) thickening the first leached slurry to obtain a first overflow and an underflow, subjecting the first overflow to neutralization for iron removal, wherein a leached residual acid has a concentration of 5-15 g/L; and
subjecting the underflow to second-stage leaching; and
(c) performing the second-stage leaching for 2-3 h to obtain a second leached slurry, wherein a slurry temperature of the second-stage leaching is controlled at 95°C-100°C;
subjecting the second leached slurry to separation to obtain the crude silica slag and a second overflow; and
returning the second overflow to the first-stage leaching.

4. The method of claim 1, **characterized in that** in step (3), the crude silica slag is slurried before CCD; and the CCD is performed in a thickener, and adopts a 5-stage countercurrent washing process with a weight ratio of washing water to a solid entering the thickener controlled at 2:1.

5. The method of claim 1, **characterized in that** in step (3), the reduction smelting uses the silicon slag as a main raw material and an upgraded coke powder and a wood block as reducing agents, and is performed in a semi-closed submerged arc furnace.

6. The method of claim 1, **characterized in that** in step (3), the refining for impurity removal adopts a bottom-blowing method using oxygen and a compressed air, and is performed through a step of:
sequentially blowing the compressed air and oxygen to a bottom of a silicon ladle to perform oxidative refining on a molten silicon.

7. The method of claim 1, **characterized in that** in step (4), the iron removal adopts a two-stage process, the two-stage process comprises a first-stage iron removal and a second-stage iron removal;
the first-stage iron removal comprises:
neutralizing a residual acid using a magnesium hydroxide slurry as a neutralizing agent, such that an endpoint pH value of the first-stage iron removal is controlled at 3.0-3.5 to allow hydrolytic precipitation of ferric iron and aluminum, and silica is simultaneously co-precipitated for removal, so as to obtain a first-stage slurry; and subjecting the first-stage slurry to thickening separation;
the second-stage iron removal comprises:
controlling an endpoint pH value of the second-stage iron removal at 4.0-4.5, blowing compressed air to oxidize ferrous iron to ferric iron, enabling further hydrolysis of iron and aluminum in the first-stage slurry; subjecting an overflow of the second-stage iron removal to nickel precipitation; and slurrying an underflow of the second-stage iron removal with a CCD overflow liquid followed by returning to the first-stage iron removal for valuable metal recovery from a residue.

8. The method of claim 1, **characterized in that** in step (6), the drying adopts a process involving cooling granulation, one-stage air fluidization dehydration and one-stage molten salt dehydration to obtain anhydrous magnesium chloride.

9. The method of claim 8, **characterized in that** the one-stage molten salt dehydration adopts a hydrogen chloride drying system to gradually remove water molecules from the second magnesium chloride solution to obtain a molten magnesium chloride and a water-containing hydrogen chloride gas; and the water-containing hydrogen chloride gas is recovered for hydrochloric acid production.

10. The method of claim 1, **characterized in that** the method adopts a comprehensive serpentine ore utilization system;
the comprehensive serpentine ore utilization system comprises a two-stage countercurrent leaching reaction device; a leachate outlet of the two-stage countercurrent leaching reaction device is connected to a solid-liquid separation and washing device; an overflow outlet of the solid-liquid separation and washing device is connected to a metallic magnesium production line; and a silicon slag outlet of the solid-liquid separation and washing device is connected to an industrial silicon production line;
the metallic magnesium production line comprises an iron removal device, a nickel precipitation device, an evaporation concentration device, a magnesium chloride drying device and a magnesium chloride electrolysis device connected in sequence; and
the industrial silicon production line comprises a silicon slag drying device, a reduction smelting device and a refining and impurity removal device connected in sequence.
